# EUROPÄISCHE PATENTSCHRIFT

(11) **EP 0 978 400 B1**
(45) Veröffentlichungstag und Bekanntmachung des Hinweises auf die Patenterteilung: **19.01.2005**
(21) Anmeldenummer: 99115388.3
(22) Anmeldetag: 04.08.1999
(51) Int. Cl.: B60J 7/047

(54) **Fahrzeugdach**
Vehicle roof
Toit de véhicule

(30) Priorität: 06.08.1998 DE 19835535
(43) Veröffentlichungstag der Anmeldung: 09.02.2000
(73) Patentinhaber: Webasto Dachsysteme GmbH, 82131 Stockdorf (DE)
(72) Erfinder: Färber, Manfred, 82407 Wielenbach (DE)
(74) Vertreter: Wiese, Gerhard

(56) Entgegenhaltungen:
- EP-B- 0 309 775
- DE-C- 4 142 265
- DE-C- 19 608 916
- US-A- 5 484 185

## Beschreibung

Die Erfindung bezieht sich auf ein Fahrzeugdach gemäß dem Oberbegriff von Anspruch 1.

Eine solches gattungsgemäßes Fahrzeugdach ist aus DE 195 29 522 C1 bzw. DE 195 29 702 C1 bekannt. Darin ist jeweils ein Verriegelungsmechanismus mit einem schwenkbaren Riegelstein beschrieben, welcher benachbarte Befestigungselemente unter dem unmittelbaren Einfluß der Öffnungsbewegung des diesen beiden Befestigungselementen vorhergehenden Befestigungselements, d.h. ohne Verwendung eines Riegelsteinschiebers, fest miteinander verriegelt, sobald diese beiden Befestigungselemente voll ausgeschwenkt sind, bzw. unter Einfluß der entsprechenden Schließbewegung wieder entriegelt. Nachteilig bei diesem Verriegelungsmechanismus ist, daß bei einem Unfall die gesamte Beschleunigung des Lamellenpaketes von der Verriegelung zwischen den beiden letzten Befestigungselementen aufgefangen werden muß, was zu einem Versagen der Verriegelung führen kann.

Aus DE 196 08 916 C1 ist ein ähnliches Fahrzeugdach bekannt, bei welchem allerdings die ausgeschwenkten Befestigungselemente nicht untereinander, sondern jeweils einzeln fest mit der dachfesten Führungsbahn verriegelt werden. Die Verriegelungselemente werden durch Riegelwippen gebildet, die in ihrem Mittelabschnitt schwenkbar gelagert sind, an ihrem einen Endabschnitt ein Riegelteil und an ihrem anderen Endabschnitt einen Betätigungsarm aufweisen. Das Riegelteil greift in der Verriegelungsstellung in entsprechende Ausnehmungen in der dachfesten Führungsbahn ein. Nachteilig dabei ist, daß bei diesem Fahrzeugdach die Dachöffnung nur von vorn nach hinten geöffnet werden kann, d.h., daß z.B. nicht der hintere Teil der Dachöffnung unabhängig vom vorderen Teil geöffnet werden kann.

Es ist Aufgabe der vorliegenden Erfindung, ein gattungsgemäßes Fahrzeugdach mit einer Folge von Deckelelementen zu schaffen, das einen selbsttätig lösbaren Verriegelungsmechanismus aufweist, der ein flexibles Öffnen und Schließen des Fahrzeugdaches ermöglicht und auch im Falle eines Unfalls eine sichere Verriegelung gewährleistet.

Diese Aufgabe wird ausgehend von einem Fahrzeugdach der eingangs genannten Art erfindungsgemäß dadurch gelöst, daß mindestens ein Teil aller voll ausgeschwenkten Befestigungselemente jeweils in festem Eingriff mit einen gemeinsamen Koppelelement steht, welches entlang der dachfesten Führungsbahn verschiebbar ist bzw. bzgl. dieser auch festsetzbar ist

Weitere bevorzugte Ausgestaltungen der Erfindung ergeben sich aus den Unteransprüchen.

Bei dieser erfindungsgemäßen Lösung ist vorteilhaft, daß die Dachöffnung von vorn und von hinten geöffnet werden kann und der Verriegelungsmechanismus jedes einzelnen Befestigungselements dennoch auch bei einem Unfall nur mit einer relativ kleinen Trägheitskraft beaufschlagt wird.

In vorteilhafter Ausgestaltung der Erfindung ist vorgesehen, daß das Koppelelement in mindestens einer Position mit der dachfesten Führungsbahn verriegelbar ist, wobei vorzugsweise ferner ein von einem Antrieb zu einer Verschiebung entlang der Führungsbahn angetriebenes Koppelsteuerteil vorgesehen ist, welches mit dem Koppelelement verriegelbar ist. Dies trägt zur Unfallsicherheit bei.

In vorteilhafter Weiterbildung der Erfindung weist das Koppelelement eine Verriegelungsvorrichtung zur Verriegelung mit der dachfesten Führungsbahn bzw. mit dem Koppelsteuerteil auf, die durch eine Verschiebung des Koppelsteuerteils bezüglich des Koppelelements in der Schließstellung des Deckelelementverbunds so betätigt wird, daß sie die Verriegelung mit der dachfesten Führungsbahn löst und die Verriegelung mit dem Koppelsteuerteil schließt. Dies erlaubt beim Öffnen von vorn nach hinten eine sichere Fixierung des Deckelelementpakets im hinteren Teil der Dachöffnung, während wahlweise ohne zusätzliche Eingriffe des Fahrers auch von hinten nach vorn geöffnet werden kann.

Vorzugsweise steht das Koppelsteuerteil derart mit dem hintersten Befestigungselement in Eingriff, daß eine Verschiebung des Koppelsteuerteils entlang der dachfesten Führungsbahn ein Ausschwenken bzw. Zurückschwenken des hintersten Befestigungselements bewirkt. Dies erspart die Notwendigkeit einer Betätigung des hintersten Befestigungselements durch einen vorn angeordneten Antrieb, so daß keine Kraftüberleitungseinrichtung vom vorderen Ende der Dachöffnung zu deren hinterem Ende erforderlich ist.

Vorzugsweise umfaßt ferner das Koppelelement mehrere Glieder, die schwenkbar miteinander verbunden sind. Dies erlaubt eine Anpassung des Koppelelements an gewölbte Dachformen.

Zweckmäßigerweise erfolgt die Verriegelung zwischen den Befestigungselementen und dem Koppelelement über ein Verriegelungselement, das als Riegelwippe ausgebildet ist, die in ihrem Mittelabschnitt schwenkbar gelagert ist, an ihrem einen Endabschnitt ein Riegelteil und an ihrem anderen Endabschnitt einen Betätigungsarm aufweist, wobei das Koppelelement für jedes Befestigungselement eine Riegelausnehmung zur Aufnahme des Riegelteils aufweist. Dies stellt eine einfache und zugleich funktionssichere Ausgestaltung dar.

Im folgenden ist eine Ausführungsformen der Erfindung anhand der Zeichnungen näher erläutert. Es zeigen:
- FIG. 1: eine perspektivische schematische Ansicht eines Lamellendaches im teilweise geöffneten Zustand;
- FIG. 2: eine Ansicht entsprechend FIG. 1 bei von vorn vollständig geöffneter Dachöffnung;
- FIG. 3: eine Ansicht entsprechend FIG. 1 bei von hinten vollständig geöffneter Dachöffnung;
- FIG. 4: eine Ansicht entsprechend FIG. 1 bei sowohl von vorn als auch von hinten vollständig geöffneter Dachöffnung;

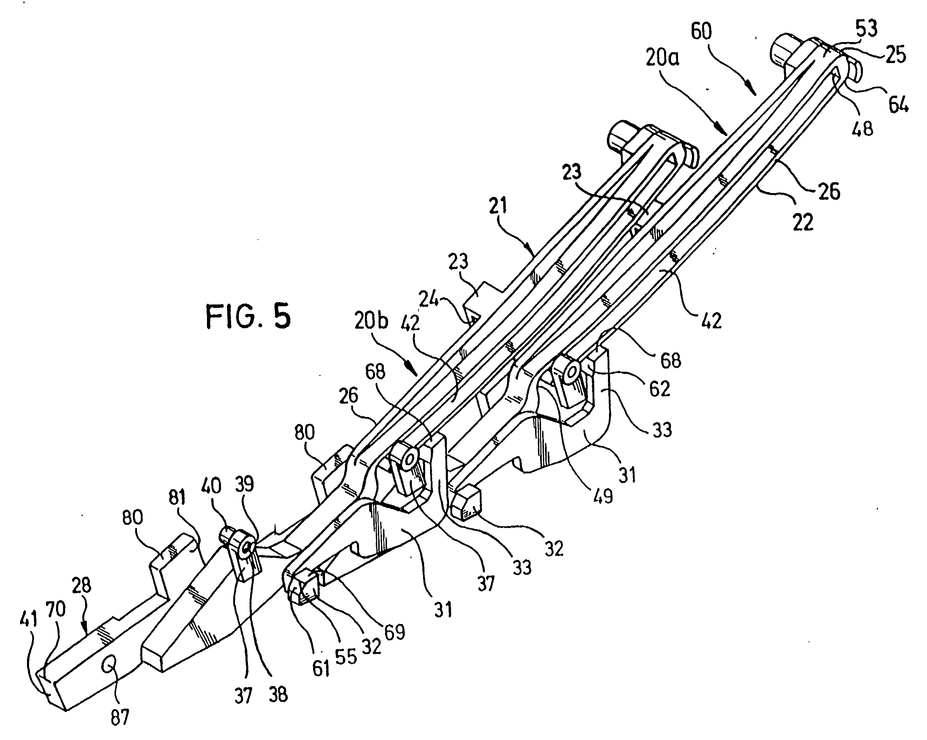

- FIG. 5: eine perspektivische Ansicht der Verstellelemente zweier ausgeschwenkter Befestigungselemente;

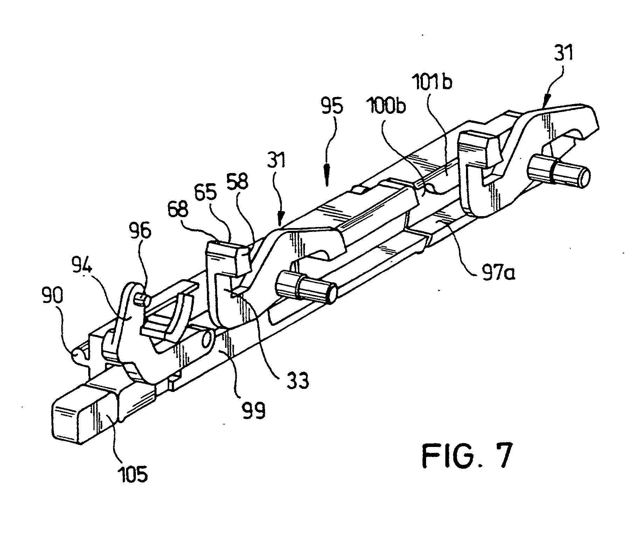

- FIG. 6 und 7: zwei unterschiedliche perspektivische Ansichten eines Teils des Koppelelements mit Koppelsteuerteil und zwei Riegelwippen;

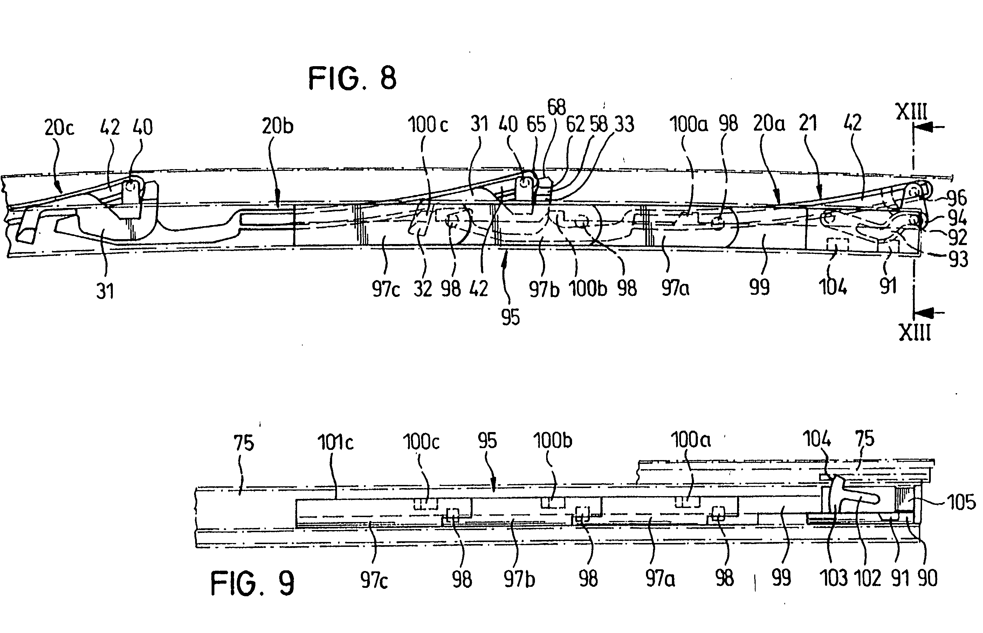

- FIG. 8: eine Seitenansicht eines Teils der Befestigungselemente und des Koppelelements mit Koppelsteuerteil in Schließstellung ;
- FIG. 9: eine Ansicht wie FIG. 8, jedoch von unten gesehen;
- FIG. 10: eine Ansicht wie FIG.8, jedoch mit über den hinteren Rand der Dachöffnung angehobener letzter Lamelle;
- FIG. 11: eine Ansicht wie FIG. 8, jedoch in der Stellung von FIG. 2;

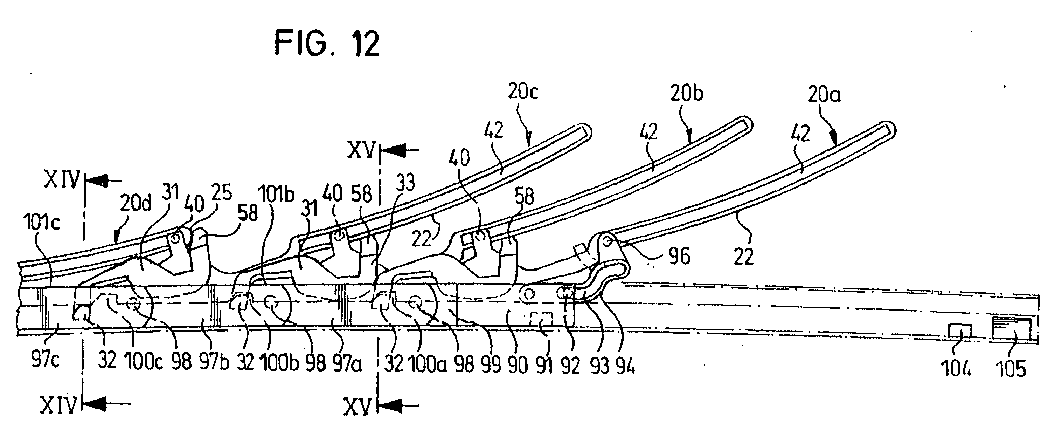

- FIG. 12: eine Ansicht wie FIG. 8, jedoch in der Stellung von FIG. 4;
- FIG. 13: die Schnittansicht entlang XIII-XIII in FIG. 8;
- FIG. 14: die Schnittansicht entlang XIV-XIV in FIG. 12;

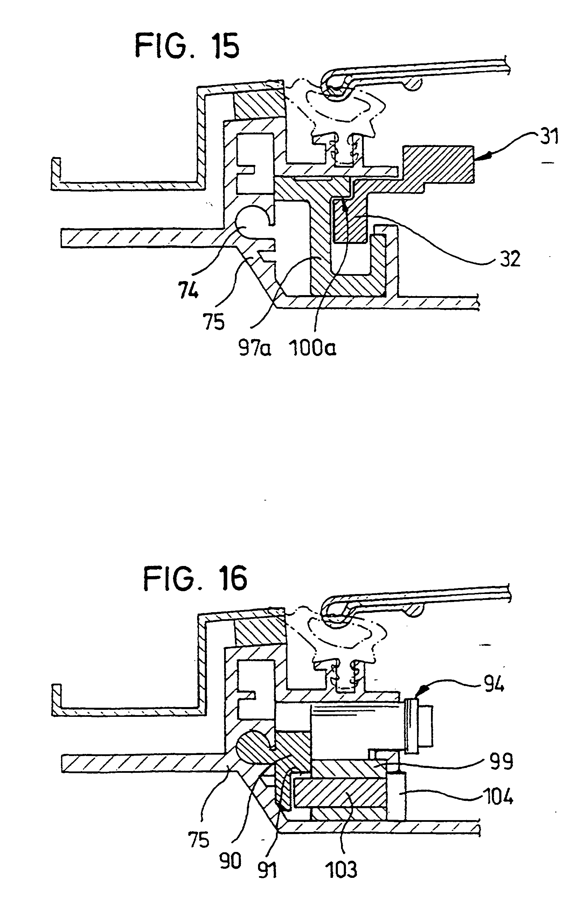

- FIG. 15: die Schnittansicht entlang XV-XV in FIG. 12; und
- FIG. 16: die Schnittansicht entlang XVI-XVI in FIG. 10.

Richtungen werden im weiteren wie folgt bezeichnet: "vorn" bzw. "vorhergehend" bedeutet in Richtung von der als ersten voll ausgeschwenkten Lamelle weg, "hinten" bzw. "nachfolgend" bedeutet in Richtung zu der als ersten voll ausgeschwenkten Lamelle hin, "innen" bedeutet quer zur Fahrtrichtung zur Dachöffnung hin, "außen" quer zur Fahrtrichtung von der Dachöffnung weg, "oben" bedeutet von Fahrzeugboden weg, "unten" zum Fahrzeugboden hin.

Bei der veranschaulichten Ausführungsform bedeutet insbesondere "vorn" bzw. "vorhergehend" in normaler Fahrtrichtung, und "hinten" bzw. "nachfolgend" bedeutet entgegen der normalen Fahrtrichtung.

Der Begriff "Lamelle" soll nicht einschränkend bezüglich der geometrischen Form, insbesondere hinsichtlich des Verhältnisses von Länge zu Breite, verstanden werden. Es kann sich dabei auch um Deckelelemente handeln, die beispielsweise etwa so lang wie breit sind.

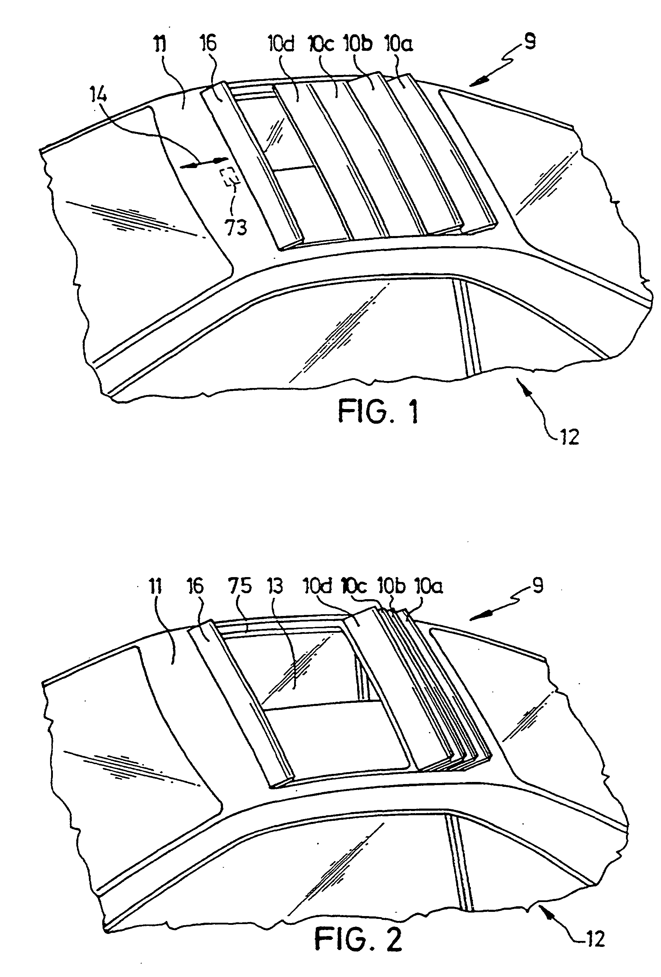

Das vorliegend erläuterte, als Lamellendach zu bezeichnende Fahrzeugdach 9 weist, wie aus den Prinzipdarstellungen der FIGn.1 und 2 hervorgeht, eine Folge von Schiebelamellen 10a bis 10d auf. Diese Lamellen dienen dem wahlweisen Verschließen oder mindestens teilweisen Freigeben einer Dachöffnung 13, die in einer festen Dachfläche 11 eines Kraftfahrzeuges 12 ausgebildet ist. Zum Öffnen und Verschließen des Daches 9 lassen sich die Lamellen 10a bis 10d verschieben, wobei im gezeigten Ausführungsbeispiel die mit dem Doppelpfeil 14 angedeutete Verschieberichtung parallel zur Fahrzeuglängsachse verläuft. Grundsätzlich sind aber auch andere Verschieberichtungen, z.B. quer zur Fahrzeuglängsachse, möglich. In ihrer Schließstellung stoßen die Lamellen 10a bis 10d mit ihren quer zur Verschieberichtung verlaufenden Längskanten beziehungsweise dort angeordneten Dichtelementen dichtend aneinander an. Dabei bilden sie einen flächigen Lamellenverbund, wie dies in Fig. 1 für die beiden Lamellen 10d und 10c angedeutet ist. Die Lamellen 10a bis 10d können ferner jeweils um eine sich quer zur Verschieberichtung Pfeil 14 erstreckende (virtuelle) Schwenkachse verschwenkt werden, die im veranschaulichten Ausführungsbeispiel näherungsweise in Höhe der festen Dachfläche 11 liegt.

Eine nachstehend näher erläuterte Verstellmechanik koordiniert die Verschiebe- und Schwenkbewegungen der einzelnen Lamellen 10a bis 10d derart, daß beim Verstellen der Schiebelamellen der flächige Lamellenverbund eine Translationsbewegung in der Verschieberichtung (Pfeil 14) ausführt und dieser Verbund beim Öffnen des Daches 9 im Bereich des vorderen und/oder des hinteren Verbundendes durch Herausbewegen jeweils einer Lamelle aus dem Verbund Lamelle für Lamelle aufgelöst bzw. beim Schließen des Daches wiederhergestellt wird. Ergänzend zum Öffnen von vorne und/oder hinten ist auch eine Verfahrung des Lamellenpakets im geöffneten Zustand mit variabler Paketgröße an eine beliebige Stelle der Dachöffnung möglich. Im Verlauf des Öffnens des zuvor geschlossenen Daches 9 wird dabei zunächst die Lamelle 10a so verschwenkt, daß sie mit ihrem hinteren Rand vom hinteren Rand der Dachöffnung 13 freikommt. Anschließend kann auf den Lamellenverbund eine Verstellkraft nach hinten und/oder nach vorne ausgeübt werden.

Beispielsweise kann die Lamelle 10a dann beginnend in der zuvor geschilderten Schräglage zusammen mit den übrigen, im flächigen Lamellenverbund verbleibenden, d.h. nicht ausgeschwenkten, Lamellen 10b bis 10d nach hinten verschoben werden. Dabei wird die Lamelle 10a kontinuierlich in ihre Endlage weiter verschwenkt. Nachdem die Lamelle 10a ihre in den FiGn. 1 und 2 veranschaulichte hintere Endstellung erreicht hat, wird die nächste Lamelle 10b ausgestellt. Dieses Spiel wiederholt sich, bis entsprechend FIG.2 alle Schiebelamellen 10a bis 10c ausgestellt und nach hinten in ihre Offenstellung geschoben sind. Beim Schließen des Daches 9 wird in diesem Fall ausgehend von der Offenstellung gemäß Fig. 2 zunächst nur die Lamelle 10d vorbewegt und in eine zur festen Dachfläche 11 parallele Lage zurückverschwenkt. Ein entsprechender Bewegungsablauf wird nacheinander für die folgenden Lamellen 10c, 10b und 10a erzwungen, bis die Lamellen in flächigem Verbund in ihrer vorderen Endstellung stehen und die Dachöffnung 13 verschließen.

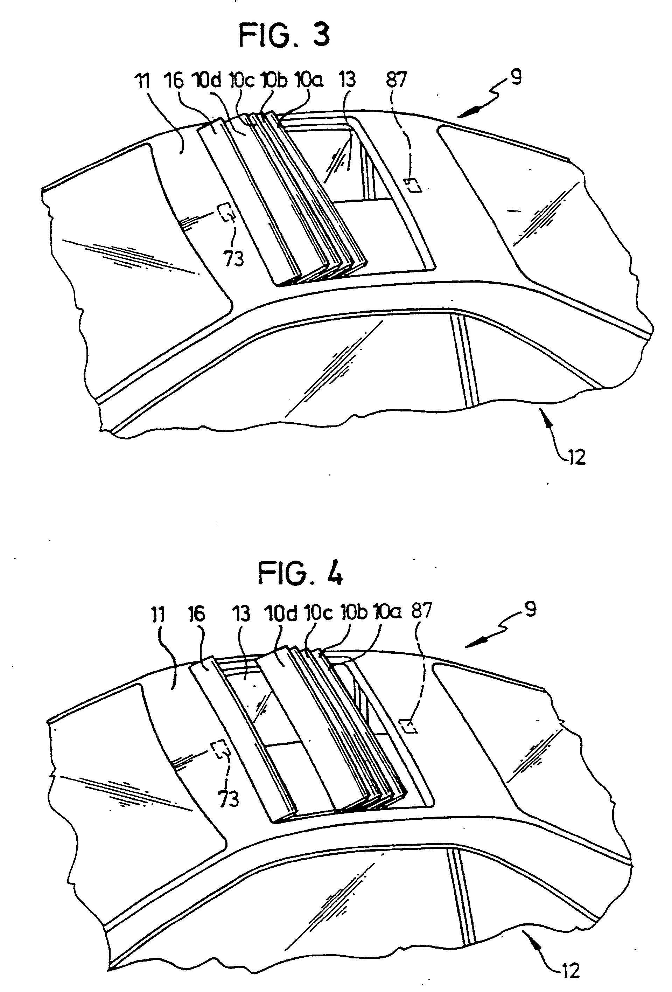

Es ist aber auch möglich, nach anfänglichem Verschwenken der Lamelle 10a Verstellkraft auf den Lamellenverbund von hinten auszuüben und dadurch die Lamellen beginnend mit der Lamelle 10a nacheinander auszustellen und in Richtung auf den vorderen Rand der Dachöffnung 13 zusammenzuschieben, wie dies in Fig. 3 angedeutet ist.

Eine weitere Alternative besteht darin, daß auf den Lamellenverbund Verstellkraft von vorn und von hinten aufgebracht wird, so daß gemäß Fig. 4 im geöffneten Zustand ein Paket ausgestellter und zusammengeschobener Lamellen 10a bis 10d in einem mittleren Teil der Längsabmessung der Dachöffnung 13 steht und als Paket mit variabler Paketgröße auch an eine beliebige Stelle der Dachöffnung verfahrbar ist.

Im Falle der veranschaulichten Ausführungsform sitzt im Bereich des vorderen Endes der Dachöffnung 13 ein ausstellbarer, lamellenförmiger Windabweiser 16, der beim Einleiten des Öffnungsvorganges um eine quer zur Fahrzeuglängsachse verlaufende Schwenkachse in eine schräg nach hinten ansteigende Lage verschwenkt wird. Dabei nimmt das Dach eine Lüftungsstellung ein, die bei in Schließstellung befindlichen Lamellen auch bei Regen benutzt werden kann. Der Windabweiser 16 legt sich in der Schließstellung des Daches 9 mit seiner Hinterkante gegen die Vorderkante der in der vorderen Endstellung stehenden Schiebelamelle 10d dichtend an. Er verschließt dabei den vordersten Teil der Dachöffnung 13. Gegebenenfalls kann die Auslegung aber auch so getroffen sein, daß der flächige Verbund der Lamellen 10a bis 10d in der Schließstellung von der Vorderkante bis zur Hinterkante der Dachöffnung 13 reicht und damit allein die Schließfunktion übernimmt. Dabei kann gegebenenfalls in für Schiebedächer an sich bekannter Weise ein Windabweiser vorgesehen sein, der bei geschlossenem Dach unter der festen Dachfläche verschwindet und der selbsttätig in eine Arbeitsstellung übergeht, wenn das Dach geöffnet wird. In den FiGn. 1 und 2 ist ein Fahrzeugdach mit vier Schiebelamellen 10a bis 10d dargestellt. Es versteht sich jedoch, daß die Anzahl der Schiebelamellen grundsätzlich beliebig in Abhängigkeit von den jeweiligen Gegebenheiten gewählt werden kann. Die gesamte Dachöffnung 13 kann beispielsweise durch nur zwei Lamellen bzw. Deckelelemente abgedeckt sein.

Jede Lamelle 10a bis 10d ist an ihren beiden Schmalseiten mit je einem Befestigungselement 20a bis 20d verbunden. Die Befestigungselemente 20a bis 20d sind vorzugsweise in der an sich aus DE 196 08 916 C1 bekannten Weise ausgebildet und werden deshalb hier nicht mehr vollständig im Detail beschreiben. Ein Befestigungselement 20 setzt sich aus einem außen liegenden Verstellelement 60 und einem innen liegenden, eine Lamelle 10 tragenden Trägerelement (nicht gezeigt) zusammen. Die Verstellelemente 60 weisen jeweils einen hinteren Teil 21 und einen vorderen Teil 28 auf.

Am hinteren Ende 53 des hinteren Teils 21 ist eine gekrümmte, nach hinten weisende Anlagefläche 25 ausgebildet, die nach unten von einer Kante 64 begrenzt wird. Die Unterseite 22 des hinteren Teils 21 wird von einer in Verschieberichtung 14 leicht gekrümmten Fläche gebildet. Im hinteren Bereich der Außenseite des hinteren Teils 21 des Verstellelements 60 ist ein geschwungener Kulissenschlitz 42 ausgebildet, dessen Krümmung in etwa zu der Krümmung der Unterseite 22 parallel läuft und dessen vorderes Ende mit 49 sowie dessen hinteres Ende mit 48 bezeichnet sind. Die Innenseite des hinteren Teils 21 ist mit 26 bezeichnet.

Das Befestigungselement 20 ist auf bekannte Weise in einer dachfesten Führungsbahn, die in einer Führungsschiene 75 ausgebildet ist, verschiebbar geführt. Etwa in der Mitte des hinteren Teils 21 des Verstellelements 60 ist innen seitlich ein Mitnehmer 23 mit einer nach hinten weisenden, von einer Unterkante 67 begrenzten Anlagefläche ausgebildet, die leicht nach vorn geschwungen ist. Der Mitnehmer 23 weist von unten eine Ausnehmung 24 auf.

Weiter vorn ist außen seitlich an dem Verstellelement 60 ein sich nach oben erstreckender Arm 37 mit einer Bohrung 38 ausgebildet. Ein in diese Bohrung 38 eingesteckter Stift 39 trägt einen Schuh 40. Der Schuh 40 ist an der Innenseite des Arms 37 um eine quer zu Verschieberichtung (Pfeil 14) orientierte Achse schwenkbar mit dem Arm 37 verbunden. Der Schuh 40 steht mit dem Kulissenschlitz 42 des vorangehenden Befestigungselements 20 derart in Eingriff, daß er entlang des Kulissenschlitzes 42 verschiebbar ist.

Das Vorderende des vorderen Teils 28 wird von einer vorderen Stirnfläche 41 gebildet, deren Oberkante mit 70 bezeichnet ist. Im hinteren Abschnitt des vorderen Teils 28 ist am äußeren Rand ein sich nach oben erstreckender Gegenhalter 80 ausgebildet, der eine nach außen weisende Anlagefläche 81 aufweist. Der hintere Teil 21 des vorhergehenden Verstellelements 60, das durch den Eingriff des Schuhs 40 in den Kulissenschlitz 42 mit dem nachfolgenden Befestigungselement verbunden ist, wird seitlich nach innen durch Anlage der Innenseite 26 des hinteren Teils 21 des Verstellelements 60 an der Anlagefläche 81 des Gegenhalters 80 und seitlich nach außen durch Anlage an dem Schuh 40 bzw. dem Arm 37 geführt, so daß kein Verkanten erfolgen kann.

Der vordere Teil 28 ist gegenüber dem hinteren Teil 21 des Verstellelements 60 nach innen parallel versetzt. Die Innenfläche des nach innen weisenden Mitnehmers 23 ist in etwa bündig mit der Innenfläche des vorderen Teils 28. Die Ausnehmung 24 an dem Mitnehmer 23 ist so bemessen, daß sich der Gegenhalter 80 des nachfolgenden Verstellelements 60 ohne Verkantungsgefahr durch diese in Öffnungsrichtung hindurch bewegen kann.

Im Bereich des vorderen Abschnitt des hinteren Teils 21 ist an dessen Außenseite ein als Riegelwippe 31 ausgebildetes Verriegelungselement schwenkbar gelagert. Der hintere Abschnitt der Riegelwippe 31 ist als nach oben weisender Betätigungsarm 33 ausgebildet, der eine gekrümmte, nach vorn oben weisende Anlagefläche 62 aufweist, die mit der Anlagefläche 25 des hinteren Teils 21 des vorhergehenden Verstellelements 60 zusammenpaßt. Die Anlagefläche 62 ist durch eine Kante 65 von einer oberen Anlagefläche 68 getrennt. In seinem oberen Abschnitt weist der Betätigungsarm 33 eine nach innen weisende Nase 58 auf. Ein (nicht dargestelltes) Schwenklagerelement, beispielsweise eine genietete Öse, durchgreift eine (nicht dargestellte) Bohrung im hinteren Teil 21 und eine (nicht dargestellte) Bohrung im mittleren Bereich der Riegelwippe 31 unter Bildung einer Schwenkachse, die quer zur Verschieberichtung (Pfeil 14) orientiert ist und um welche die Riegelwippe 31 mit Bezug auf das Verstellelement 60 geschwenkt werden kann. Im vorderen Abschnitt der Riegelwippe 31 ist ein Riegelteil 32 ausgebildet, welches nach außen versetzt ist. Das Riegelteil 32 weist eine schräge, nach vorn oben weisende Anlagefläche 61 und eine im Bereich einer Kante 55 daran angrenzende obere schräge Anlagefläche 69 auf. Die Riegelwippe 31 wird durch eine Feder an dem Schwenklagerelement so vorgespannt, daß der Betätigungsarm 33 nach oben gedrückt ist.

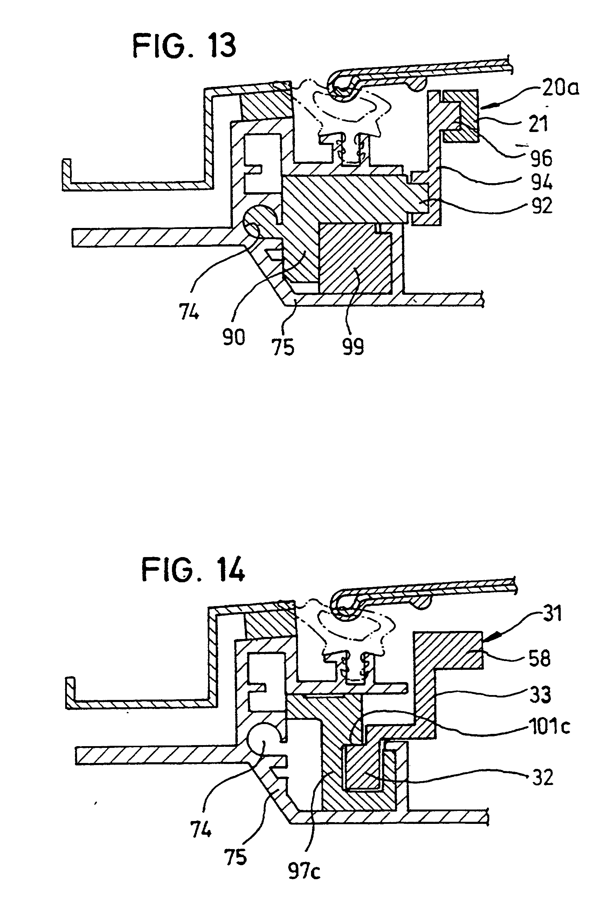

Ein von einer hinteren Antriebseinheit 87 mittels eines drucksteifen Antriebskabels angetriebenes Koppelsteuerteil 90 ist im Bereich des hintersten Befestigungselements 20a verschiebbar entlang einer Führungsbahn 74 der Führungsschiene 75 geführt. Das Koppelsteuerteil 90 weist eine Riegelausnehmung 91 sowie einen Kulissenstift 92 auf, der in einen S-förmigen Kulissenschlitz 93 eines Ausstellhebels 94 eingreift, der an seinem einen Ende schwenkbar an dem hintersten Glied 99 eines Koppelelements 95 angelenkt ist und an seinem anderen Ende einen Kulissenstift 96 trägt, der in den Kulissenschlitz 42 des hintersten Befestigungselements 20a eingreift. Das Koppelelement 95 ist in mehrere Glieder 97a bis 97c unterteilt, die jeweils über ein Gelenk 98 schwenkbar miteinander verbunden sind. Jedes Glied 97a bis 97c weist eine Wange 101a bis 101c auf, in der eine Riegelausnehmung 100a bis 100c ausgebildet ist. Das hinterste Glied 99 weist einen seitlich schwenkbaren Riegelhammer 102 auf, dessen Kopf 103 in eine Riegelausnehmung 104 der Führungsschiene 75 oder in die Riegelausnehmung 90 eingreifen kann. Das Koppelelement 95 ist - wie für das Glied 97c in Fig. 14 dargestellt - entlang der Führungsschiene 75 verschiebbar geführt.

Mit dem vorderen Teil 28 des Verstellelements 60 der vordersten Lamelle 10d steht ein vorzugsweise als Gewindekabel ausgebildetes Antriebskabel (nicht gezeigt) in Antriebsverbindung. Das Antriebskabel erstreckt sich zu einer in Fig. 1 nur andeutungsweise dargestellten vorderen Antriebseinheit 73. Die vordere Antriebseinheit 73 kann, ebenso wie die hintere Antriebseinheit 87, in an sich bekannter Weise einen Elektromotor und ein Untersetzungsgetriebe aufweisen, wobei ein mit dem Ausgang des Untersetzungsgetriebes verbundenes Ritzel mit den entsprechenden Antriebskabeln in Eingriff steht.

Die Funktionsweise des beschriebenen Lamellendaches ist wie folgt:

In der Schließstellung des Daches sind benachbarte Lamellen 10 bzw. Befestigungselemente 20 fest miteinander gekuppelt. Für eine Verschiebung nach hinten geschieht dies durch das Anliegen der Stirnfläche 41 eines Befestigungselements (z.B. 20c) an der Anlagefläche 25 des Mitnehmers 23 des vorhergehenden Befestigungselements (z.B. 20d). Die Kupplung für eine Verschiebung nach vorn erfolgt durch das Anliegen des Schuhs 40 eines Befestigungselements (z.B. 20c) an dem hinteren Ende 48 des Kulissenschlitzes 42 des vorhergehenden Befestigungselements (z.B. 20d) und/oder durch Anliegen zweier anderer Anlageflächen an je zwei benachbarten Verstellelementen 60. Die einzelnen Lamellen sind somit gegen unbeabsichtigtes Verschieben geschützt. Die Riegelwippen 31 sind jeweils durch die Federn so vorgespannt, daß die Anlagefläche 62 des Betätigungsarms 33 an der Anlagefläche 25 des vorhergehenden Verstellelements 60 anliegt.

Die Trägerelemente, und damit die Lamellen 10, liegen alle parallel zur Dachebene. Benachbarte Befestigungselemente 20 sind, wie oben beschrieben, durch Anlage des hinteren Teils 21 an dem Schuh 40 bzw. dem Arm 37 und dem Gegenhalter 80 wechselseitig in Verschieberichtung sicher geführt.

Der Riegelhammer 102 greift mit der einen Seite des Kopfes 103 in die dachfeste Riegelausnehmung 104 ein, um das hinterste Glied 99, und damit das gesamte Koppelelement 95, dachfest zu verriegeln, wobei der Riegelhammer dadurch in der Riegelausnehmung 104 gehalten wird, daß die andere Seite des Kopfes 103 an einer Wand des Koppelsteuerteils 90 anliegt. Das hinterste Glied 99 wird zusätzlich durch einen Anschlag 105 an der Führungsschiene 75 nach hinten gesichert.

Der Kulissenstift 96 des Ausstellhebels 94 liegt am hinteren Ende 48 des Kulissenschlitzes 42 des hintersten Befestigungselements an. Der Kulissenstift 92 des Koppelsteuerteils 90 liegt im Bereich des hinteren Endes des Kulissenschlitzes 93 des Ausstellhebels 94.

Zum Öffnen des Daches von vorn nach hinten wird von der vorderen Antriebseinheit 73 Kraft auf die Antriebskabel 59 zu beiden Seiten der Dachöffnung 13 in nach hinten weisender Richtung übertragen. Zunächst bewirkt die Antriebsbewegung der Antriebseinheit in aus z.B. DE-PS-43 29 580 bekannter Weise ein Ausschwenken des Windabweisers 16.

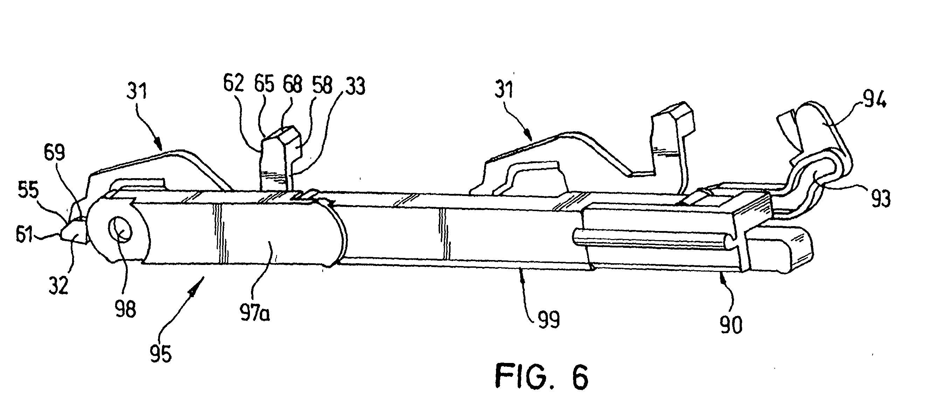

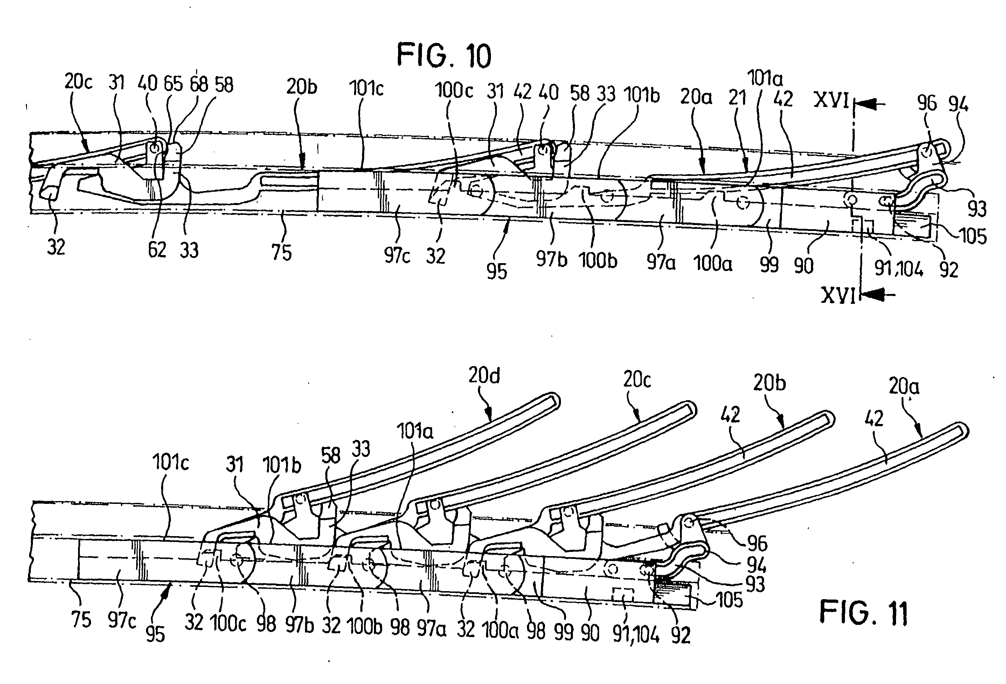

Anschließend oder gleichzeitig wird die hintere Antriebsvorrichtung 87 aktiviert, um das Koppelsteuerteil 90 bezüglich des hintersten Glieds 99 des Koppelelements 95 nach vorn zu schieben. Dabei gleitet der Kulissenstift 92 des Koppelsteuerteils 90 in dem Kulissenschlitz 93 des Ausstellhebels 94 nach vorn, wobei aufgrund der Formgebung des Kulissenschlitzes 93 des Ausstellhebels 94 mit dem hinteren Ende nach oben verschwenkt wird. Dadurch wird auch der Kulissenstift 96 angehoben, was aufgrund dessen Eingriff in den Kulissenschlitzes 42 des hintersten Befestigungselements 20a wiederum ein Ausstellen der hintersten Lamelle 10a bewirkt, wodurch diese mit ihrer hinteren Kante über die (nicht näher dargestellte) Abdichtung am hinteren Rand der Dachöffnung 13 angehoben wird (siehe Fig. 6 und 10). Dieser Ausstellvorgang findet zunächst sein Ende, wenn das Koppelsteuerelement 90 soweit nach vorn geschoben ist, daß der Kulissenstift 92 an dem vorderen Ende des Ausstellhebels 94 angelangt ist. In dieser Stellung wird der hintere Antrieb 87 programmgesteuert abgeschaltet, wobei das letzte Glied 99 des Koppelelements 95 dachfest verriegelt bleibt. Das Koppelsteuerteil 90 wird durch die Selbsthemmung des hinteren Antriebs 87 an Ort und Stelle gehalten, wodurch der Ausstellhebel 94 in der ausgeschwenkten Stellung festgehalten wird. Der Kulissenschlitz 93 ist im vorderen Bereich horizontal ausgelegt, um die Hysterese des Antriebs 87 auszugleichen.

Das Fahrzeugdach kann auch so ausgebildet sein, daß die beschriebene ausgeschwenkte Stellung der letzten Lamelle 10a auch unabhängig davon erreicht werden kann, ob der Windabweiser 16 vorher ausgeschwenkt wird oder nicht, so daß eine zusätzliche Belüftungsstellung geschaffen wird.

Nachfolgend erfolgt eine Krafteinleitung durch den vorderen Antrieb 73, d.h. die vorderen Antriebskabel, jeweils am vordersten Befestigungselement 20d. Die Kraft wird jeweils von dem Mitnehmer 23 auf die Stirnfläche 41 des jeweils nachfolgenden Befestigungselements 20 formschlüssig übertragen, wodurch sich alle Lamellen 10a bis 10d gemeinsam nach hinten bewegen.

Der Kulissenstift 96 des Ausstellhebels 94 wird dabei in dem Kulissenschlitz 42 des letzten Befestigungselements 20a gleitend geführt. Die weitere Verschiebung des Befestigungselements 20a nach hinten gegenüber dem Kulissenstift 96 des Ausstellhebels 94 bewirkt zusätzlich zur Verschiebung eine weitere Ausstellbewegung der letzten Lamelle 10a.

Die Führungspunkte der Befestigungselemente sind so gewählt, daß das Anheben des hinteren Endes des Verstellelements 60 eine Absenkung der Stirnfläche 41 gegenüber dem Mitnehmer 23 des vorangehenden Befestigungselements 20b bewirkt. Der Schuh 40 und damit auch das hintere Ende des vorhergehenden Befestigungselements 20b werden ebenfalls leicht angehoben. Durch entsprechende Wahl der Drehhebel bzw. Positionen der Drehpunkte (Führungsstifte bzw. Lagerachsen) ist sichergestellt, daß die Hinterkante der vorletzten Lamelle 10b durch das Ausschwenken der nachfolgenden (letzten) Lamelle 10a über die Vorderkante der letzten Lamelle 10a angehoben wird, so daß ein Übereinanderschieben der aufeinanderfolgenden Lamellen stattfinden kann. Die Befestigungselemente 20a bis d sind also in solcher Weise gekoppelt, daß eine Ausschwenkbewegung des letzten Befestigungselements 20a eine sich nach vorn fortpflanzende und dabei sich stark abschwächende Ausschwenkbewegung der vorangehenden Befestigungselemente 20b bis d bewirkt. Durch die Vorspannung über die Feder wird der Betätigungsarm 33 jeder Relativbewegung zwischen benachbarten Verstellelementen 60 nachgeführt, so daß er immer an der Anlagefläche 25 des hinteren Teils 21 anliegt.

Die Befestigungselemente 20 werden bezüglich des Koppelelements 95 nach hinten verschoben. Die Vorspannung durch die Feder verhindert zuverlässig, daß das Riegelteil 32 bei der Öffnungsbewegung während das Passierens einer Riegelausnehmung 100 des Koppelelements z.B. durch eine Erschütterung in diese einrastet.

Das Riegelteil 32 ist so angeordnet, daß sich während der zunehmenden Ausstellbewegung des Verstellelements 60 im Lauf der Öffnungsbewegung die relative Höhe des Riegelteils 32 bezüglich der Wange 101 des Koppelelements 95 im wesentlichen nicht ändert. Es findet dabei jedoch eine Drehbewegung des Riegelteils 32 statt. Die obere Anlagefläche 69 des Riegelteils 32 liegt zunehmend an der unteren Anlagefläche der Wange 101 des Koppelelements 95 an. Durch eine entsprechende schräge Gestaltung der oberen Anlagefläche 69 des Riegelteils 32 bewirkt diese Anlage eine gewisse Drehung der Riegelwippe 31 im Uhrzeigersinn, d.h. der Betätigungsarm 33, und damit die Anlagefläche 62, bewegen sich nach oben.

Die Krümmung der Anlagefläche des Mitnehmers 23 bzw. der Stirnfläche 41 des vorderen Teils 28 sind so gewählt, daß ab einer bestimmten Ausschwenkstellung des Verstellelements 60 die Riegelwippe 31 durch Anlage der oberen Anlagefläche 69 an der Unterseite der Wange 101 Antriebskraft von dem vorhergehenden Verstellelement 60 auf das nachfolgende Verstellelement 60 überträgt. Dies ist insofern vorteilhaft, als die Überlappung der Anlagefläche 27 des Mitnehmers 23 mit der Stirnfläche 41 mit zunehmender Ausschwenkung immer geringer wird, so daß der Druck immer größer wird, was zu einer Beschädigung der entsprechenden Anlageflächen 27 und 41 und insbesondere der diese Flächen begrenzenden Kanten 67 bzw. 70 führen könnte. Die entsprechenden Elemente werden so dimensioniert, daß die Kraftübertragung so rechtzeitig auf die Riegelwippe 31 übergeht, daß eine solche Beschädigung auf jeden Fall vermieden wird. Auf diese Weise wird der Kraftschluß zwischen den beiden letzten Befestigungselementen 20a und 20b bereits von der entsprechenden Riegelwippe 31 übernommen, wenn sich die Oberkante der Stirnfläche 41 des letzten Befestigungselements 20a noch nicht ganz unter die Unterkante 67 der Anlagefläche 25 des Mitnehmers 23 des vorletzten Befestigungselements 20b abgesenkt hat.

Sobald die Kante 55 zwischen den Anlageflächen 61 und 69 des Riegelteils 32 die Riegelausnehmung 100a des hintersten Glieds 99 des Koppelelements 95 erreicht hat, kann sich das Riegelteil 32 nach oben in die Riegelausnehmung 100a hineinbewegen, was wiederum ein Abgleiten der Anlagefläche 62 bzw. der Kante 65 des Riegelteils auf der geneigten Anlagefläche 25 des Verstellelements 60 nach unten erlaubt. Auf diese Weise ist nun der Kraftschluß zwischen den beiden letzten Befestigungselementen 20a und 20b aufgehoben. Diese Befestigungselemente sind jetzt entkuppelt. Das vorletzte Befestigungselement 20b kann sich nun relativ zu dem letzten verschieben.

Das Riegelteil 32 wird nun durch die Anlage der oberen Anlagefläche 68 des Betätigungsarms 33 an der Unterseite 22 des hinteren Teils 21 des Verstellelements 60 in Eingriff mit der letzten Riegelausnehmung 101a des Koppelelements 95 gehalten und bewirkt auf diese Weise eine dachfeste Verriegelung des letzten Befestigungselements 20a. Die letzte Lamelle 10a ist somit gegen Vor- und Zurückbewegung gesichert.

Der weitere Öffnungsvorgang erfolgt analog wie bereits beschrieben, wobei nun anstelle des letzten Befestigungselements 20a das vorletzte Befestigungselement 20b durch Verschiebung gegenüber dem Schuh 40 des letzten Befestigungselements 20a ausgeschwenkt wird. Die Funktion des Kulissenstifts 96 des Ausstellhebels 94 wird folglich durch den Schuh 40 bzw. das vordere Teil 28 des letzten, nunmehr dachfest verriegelten Befestigungselements 20a übernommen. Wenn das vorletzte Befestigungselement 20b voll ausgeschwenkt ist, kommt die hintere Stirnfläche 51 des vorletzten Befestigungselements 20b zur Anlage an der vorderen Stirnseite 41 des letzten Befestigungselements 20a.

Die Kraftentkupplung zweier Befestigungselemente (z.B. 20b und 20c) bei der Öffnungsbewegung bewirkt jeweils, daß das vorhergehende Befestigungselement (20c) durch das Niederdrücken des Betätigungsarms 33 in die Riegelausnehmung (100b) das jeweils nachfolgende Befestigungselement (20b) dachfest verriegelt.

Der Öffnungsvorgang kann nun solange analog weitergeführt werden, bis auch das vorderste Befestigungselement 20d voll ausgeschwenkt ist und die Dachöffnung 13 damit maximal freigegeben ist. Mit Ausnahme der vordersten Lamelle 10d sind dann alle Lamellen in voll ausgeschwenkter Position einzeln mit dem Koppelelement 95 verriegelt, das seinerseits über den Riegelhammer 102 dachfest verriegelt ist.

Die vorderste Lamelle 10d ist in ihrer Position dadurch verriegelt, daß der vordere Antrieb 73 über die Antriebskabel in an sich bekannter Weise starr und selbsthemmend ausgeführt ist.

Wird nun eine Schließbewegung eingeleitet, so wird von der Antriebseinheit 73 Kraft auf die an der ersten Lamelle 10d angreifenden Antriebskabel zu beiden Seiten der Dachöffnung 13 in nach vorn weisender Richtung übertragen. Die nicht verriegelte erste Lamelle 10d bewegt sich dadurch nach vorn. Der Schuh 40 des zweiten Befestigungselements 20c gleitet dabei in dem Kulissenschlitz 42 des ersten Befestigungselements 20d. Das erste Befestigungselement 20d wird durch die Schließbewegung nach vorn wieder zum Teil zurückgeschwenkt. Eine Bewegung des zweiten Befestigungselements 20c in Schließrichtung kann nicht stattfinden, da dessen Riegelteil 32 über die Anlage des Betätigungsarms 33 der Riegelwippe an der Unterseite 22 des ersten Befestigungselements 20d noch mit der Riegelausnehmung 100c in Eingriff gehalten wird.

Sobald die Kante 65 des Betätigungsarms 33 das hintere Ende der Unterseite 22 des hinteren Teils 21 des Befestigungselements 20d erreicht hat, kann sich der Betätigungsarm 33 nach oben bewegen, so daß ein Abgleiten der Anlagefläche 61 des Riegelteils 32 auf der Anlagefläche 86 der Riegelausnehmung 100c möglich wird. Die Krafteinleitung in das Befestigungselement 20c geschieht dabei , wie oben erwähnt, durch das Anliegen des Schuhs 40 des Befestigungselements 20c an dem hinteren Ende 48 des Kulissenschlitzes 42 des vorhergehenden Befestigungselements 20d oder durch Anliegen zweier anderer Anlageflächen an je zwei benachbarten Verstellelementen 60. Das Riegelteil 32 bewegt sich dadurch aus der Riegelausnehmung heraus, wodurch die dachfeste Verriegelung des Befestigungselements 20c aufgehoben wird. Die benachbarten Befestigungselemente 20d und 20c sind nun für die Schließbewegung miteinander gekuppelt. Im weiteren wird das zweite Befestigungselement 20c von dem ersten 20d mit nach vorn bewegt. Zunächst sind die beiden Befestigungselemente 20c und 20d in Öffnungsrichtung über die Riegelwippe 31 des zweiten Befestigungselements 20c gekuppelt, später über die Anlagefläche 27 des Mitnehmers 23 des ersten Befestigungselements 20d und die Stirnfläche 41 des zweiten Befestigungselements 20c. Diese Kupplung in Öffnungsrichtung würde z.B. bei einer Umkehrung der Antriebsrichtung wieder wirksam.

Der weitere Schließvorgang erfolgt für die übrigen Befestigungselemente bzw. Lamellen analog, wobei schließlich durch die Schließbewegung des vorletzten Befestigungselements 20b die dachfeste Verriegelung des letzten Befestigungselements 20a in der Riegelausnehmung 100a löst. Erreicht der in das letzte Befestigungselement 20a eingreifende Kulissenstift 96 des Ausstellhebels 94 das hintere Ende 48 des Kulissenschlitzes 42, so wird das Koppelsteuerteil mittels des hinteren Antriebs 87 wieder nach hinten zurückgeschoben, wodurch der Ausstellhebel 94 wieder abgesenkt wird und alle Lamellen wieder in einer Ebene parallel zur Dachebene liegen. Der Schließvorgang erfolgt also in der Art, daß immer ein Teil der Lamellen miteinander gekuppelt ist und sich gemeinsam in Schließrichtung bewegt, während der übrige Teil der Lamellen mit dem gemeinsamen Koppelelement 95, d.h. dachfest, verriegelt ist und nicht an der Schließbewegung teilnehmen kann. Die letzte bewegliche und die erste verriegelte Lamelle sind dabei jeweils voneinander entkuppelt. Um das mechanische Spiel gering zu halten, findet die Ankupplung der ersten verriegelten Lamelle an die letzte bewegliche Lamelle sehr kurz nach der Entriegelung der ersten verriegelten Lamelle statt, d.h. nahezu zeitgleich dazu.

Nachfolgend ist eine Öffnungsbewegung von **hinten nach vorn** beschrieben. Dabei wird die hinterste Lamelle 10a durch Ausschwenken des Ausstellhebels 94 über den Dichtungsrand angehoben. Der hintere Antrieb 87 wird nun jedoch nicht in dieser Stellung abgeschaltet, sondern läuft weiter, wodurch das Koppelsteuerteil 90 weiter nach vorn geschoben wird. Dabei passiert die Riegelausnehmung 91 den Hammerkopf 103, wodurch dieser durch Formschluß in die Riegelausnehmung 91 schwenkt, was wiederum ein Ausrücken der anderen Seite des Hammerkopfes 103 aus der dachfesten Verriegelungsausnehmung 104 bewirkt. Dadurch wird die dachfeste Verriegelung des Koppelelements 95 gelöst, und das Koppelelement 95 wird statt dessen mit dem Koppelsteuerteil 90 verriegelt, so daß im weiteren Verlauf das Koppelelement 95 zusammen mit dem Koppelsteuerteil 90 mittels des hinteren Antriebs 87 nach vorn bezüglich der ruhenden Befestigungselemente 20 verschoben wird. Der weitere Öffnungsvorgang läuft nun in exakter kinematischer Umkehr des oben beschriebenen Öffnungsvorgangs von vorn nach hinten ab, bei welchem die Befestigungselemente angetrieben werden und das Koppelelement 95 und das Koppelsteuerteil ruhen. Es wird also ebenfalls zuerst das hinterste Befestigungselement 20a voll ausgeschwenkt, mit dem vorletzten Befestigungselement 20b entkuppelt und dabei zugleich mit dem Koppelelment 95 verriegelt usw., so daß man schließlich ein am vorderen Rand der Dachöffnung 13 zusammengeschobenes Lamellenpaket erhält (siehe Fig. 3).

Alternativ kann auch der Lamellenverbund gleichzeitig von vorn und von hinten geöffnet werden, wobei man ein in der Mitte der Dachöffnung 13 zusammengeschobenes Lamellenpaket erhält (siehe Fig. 4). Beim Öffnen von vorne stellt zunächst der Windabweiser 16 aus.

Unabhängig davon, wie der Lamellenverbund geöffnet wurde, kann das gebildete Lamellenpaket durch eine synchrone Betätigung des vorderen und des hinteren Antriebs als ganzes in der Dachöffnung nach vorn oder nach hinten verschoben werden, so daß ein Höchstmaß an Flexibilität gewährleistet ist.

Statt der Ausbildung des Koppelelements 95 mit mehreren gelenkig verbundenen Gliedern 97, 99 kann das Koppelelement 95 auch einstückig aus elastischen Material ausgebildet sein.

### Bezugszeichenliste

- Fahrzeugdach: **9**
- Schiebelamellen: **10a** bis **d**
- feste Dachfläche: **11**
- Kraftfahrzeug: **12**
- Dachöffnung: **13**
- Verschieberichtung: **14**
- Windabweiser: **16**
- Befestigungselement: **20a** bis **d**
- hinterer Teil von 60: **21**
- Unterseite von 21: **22**
- Mitnehmer: **23**
- Ausnehmung in 23: **24**
- Anlagefläche von 53: **25**
- Innenfläche von 21: **26**
- vorderer Teil von 60: **28**
- Riegelwippe: **31**
- Riegelteil: **32**
- Betätigungsarm: **33**
- Arm: **37**
- Bohrung in 37: **38**
- Stift: **39**
- Schuh: **40**
- vordere Stirnfläche von 28: **41**
- Kulissenschlitz: **42**
- hinteres Ende von 42: **48**
- vorderes Ende von 42: **49**
- hinteres Ende von 21: **53**
- Kante zw. 61 u. 69: **55**
- Nase von 33: **58**
- Verstellelement (21+28): **60**
- vordere obere Anlagefläche von 32: **61**
- vordere obere Anlagefläche von 33: **62**
- Kante: **64**
- Oberkante von 33: **65**
- obere Anlagefläche von 33: **68**
- obere Anlagefläche von 32: **69**
- Oberkante von 41: **70**
- vordere Antriebseinheit: **73**
- Führungsbahn für 90: **73**
- Führungsbahn: **74**
- Führungsschiene: **75**
- Gegenhalter: **80**
- äußere Anlagefläche von 80: **81**
- hintere Antriebseinheit: **87**
- Koppelsteuerteil: **90**
- Riegelausnehmung in 90: **91**
- Kulissenstift von 90: **92**
- Kulissenschlitz von 94: **93**
- Ausstellhebel: **94**
- Koppelelement: **95**
- Kulissenstift von 94: **96**
- Glieder von 95: **97a-c**
- Gelenke zwischen 97: **98**
- letztes Glied von 95: **99**
- Riegelausnehmungen: **100a-c**
- Wangen von 95: **101a-c**
- Riegelhammer von 99: **102**
- Hammerkopf von 102: **103**
- Riegelausnehmung in 75 für 103: **104**
- Anschlag (an 75): **105**

## Patentansprüche

1. Fahrzeugdach mit einer Folge von Deckelelementen (10a bis 10d) zum wahlweisen Verschließen oder mindestens teilweisen Freigeben einer Dachöffnung (13) in einer Dachfläche (11), wobei die Deckelelemente in der Schließstellung aneinander angrenzen und einen flächigen Verbund bilden, jedes Deckelelement an seinen Schmalseiten jeweils mit einem schwenkbaren Befestigungselement (20a bis 20d) verbunden ist und die Befestigungselemente entlang einer dachfesten Führungsbahn (74) geführt sind, wobei jeweils zwei benachbarte Befestigungselemente für eine gemeinsame Bewegung in Öffnungs- und Schließrichtung gekuppelt sind, solange sie nicht voll ausgeschwenkt sind, und entkuppelt sind, sobald eines der beiden Befestigungselemente seine voll ausgeschwenkte Stellung erreicht hat, und derart miteinander in Eingriff stehen, daß sie in entkuppeltem Zustand unter Ausschwenkung des noch nicht voll ausgeschwenkten Befestigungselements gegeneinander verstellbar sind; daß ein Befestigungselement in der voll ausgeschwenkten Lage unter dem Einfluß der Öffnungsbewegung des einen benachbarten Befestigungselements fest mit mindestens einem Teil der anderen bereits voll ausgeschwenkten Befestigungselementen verriegelbar ist und daß die Verriegelung eines voll ausgeschwenkten Befestigungselements mit den anderen mindestens einem Teil der noch voll ausgeschwenkten Befestigungselementen unter dem Einfluß der Schließbewegung des einen benachbarten Befestigungselements selbsttätig lösbar ist **dadurch gekennzeichnet, daß** mindestens ein Teil aller voll ausgeschwenkten Befestigungselemente (20a bis 20d) jeweils in festem Eingriff mit einem gemeinsamen Koppelelement (95) steht, welches entlang der dachfesten Führungsbahn (74) verschiebbar ist bzw. bzgl. dieser auch festsetzbar ist.

2. Fahrzeugdach nach Anspruch 1, **dadurch gekennzeichnet, daß** das Koppelelement (95) in mindestens einer Position mit der dachfesten Führungsbahn (74) verriegelbar ist.

3. Fahrzeugdach nach Anspruch 2, **dadurch gekennzeichnet, daß** ein von einer Antriebeinheit (87) zu einer Verschiebung entlang der Führungsbahn (74) angetriebenes Koppelsteuerteil (90) vorgesehen ist, welches mit dem Koppelelement (95) verriegelbar ist.

4. Fahrzeugdach nach Anspruch 3, **dadurch gekennzeichnet, daß** das Koppelelement (95) eine Verriegelungsvorrichtung (102) zur Verriegelung mit einer dachfesten Führungsschiene (75) der Führungsbahn (74) bzw. mit dem Koppelsteuerteil (90) aufweist, die durch eine Verschiebung des Koppelsteuerteils bezüglich des Koppelelements in der Schließstellung des Deckelelementverbunds so betätigt wird, daß sie die Verriegelung mit der dachfesten Führungsschiene löst und die Verriegelung mit dem Koppelsteuerteil schließt.

5. Fahrzeugdach nach Anspruch 4, **dadurch gekennzeichnet, daß** die Verriegelungsvorrichtung einen schwenkbaren Riegelhammer (102) umfaßt, der die entsprechende Verriegelung durch Eingriff in Riegelausnehmungen (104 bzw. 91) in der dachfesten Führungsbahn (74) bzw. in dem Koppelsteuerelement (90)herstellt.

6. Fahrzeugdach nach Anspruch 3 oder 4, **dadurch gekennzeichnet, daß** eine zusätzliche Antriebseinheit (73) vorgesehen ist, um das vorderste Befestigungselement (20d) anzutreiben

7. Fahrzeugdach nach einem der Ansprüche 3 bis 6, **dadurch gekennzeichnet, daß** in der Schließstellung des Deckelelementverbunds das Koppelelement (95) mit der dachfesten Führungsbahn (74) verriegelt ist, während das Koppelsteuerteil (90) bezüglich des Koppelelements verschiebbar ist, daß zu Beginn der Öffnungsbewegung das Koppelsteuerteil auf das Koppelelement zu nach vorn geschoben wird, wodurch das hinterste Befestigungselement (20a) ausgeschwenkt wird, das Koppelsteuerteil die Verriegelung des Koppelelements mit der Führungsbahn löst und eine Verriegelung des Koppelelements mit dem Koppelsteuerteil bewirkt und daß durch weiteres Nach-vorn-Schieben des Koppelsteuerelements ein Ausschwenken und anschließend eine Verriegelung des hintersten Befestigungselements mit dem Koppelelement bewirkt wird, wobei durch fortgesetztes Nach-vorn-Schieben des Koppelsteuerelements schließlich die Deckelelemente (10a bis 10d) zu einem Paket nach vom zusammengeschoben werden.

8. Fahrzeugdach nach einem der Ansprüche 3 bis 7, **dadurch gekennzeichnet, daß** das Koppelsteuerteil (90) derart mit dem hintersten Befestigungselement (20a) in Eingriff steht, daß eine Verschiebung des Koppelsteuerteils entlang der dachfesten Führungsbahn (74) ein Ausschwenken bzw. Zurückschwenken des hintersten Befestigungselements bewirkt.

9. Fahrzeugdach nach Anspruch 8, **dadurch gekennzeichnet, daß** das Koppelsteuerteil (90) einen Ausstellhebel (94) betätigt, der schwenkbar an dem Koppelelement (95) befestigt ist und mit dem hintersten Befestigungselement (20a) zusammenwirkt.

10. Fahrzeugdach nach Anspruch 9, **dadurch gekennzeichnet, daß** der Ausstellhebel (94) als Kulissenhebel ausgebildet ist, der mittels eines Kulissenstifts (96) in einen an dem letzten Befestigungselement (20a) ausgebildeten Kulissenschlitz (42) eingreift und seinerseits mit einem Kulissenschlitz (93) versehen ist, in welchen ein an dem Koppelsteuerteil (90) ausgebildeter Kulissenstift (92) eingreift.

11. Fahrzeugdach nach einem der vorhergehenden Ansprüche, **dadurch gekennzeichnet, daß** das Koppelelement (95) mehrere Glieder (97, 99) umfaßt, die schwenkbar miteinander verbunden sind.

12. Fahrzeugdach nach einem der vorhergehenden Ansprüche, **dadurch gekennzeichnet, daß** außer für das vorderste Befestigungselelement (20d) pro Befestigungselelement (20a bis 20c) ein Koppelelement-Glied (97a bis 97c) vorgesehen ist.

13. Fahrzeugdach nach einem der vorhergehenden Ansprüche, **dadurch gekennzeichnet, daß** die Verriegelung zwischen den Befestigungselementen (20a bis 20d) und dem Koppelelement (95) über ein Verriegelungselement erfolgt, das als Riegelwippe (31) ausgebildet ist, die in ihrem Mittelabschnitt schwenkbar gelagert ist, an ihrem einen Endabschnitt ein Riegelteil (32) und an ihrem anderen Endabschnitt einen Betätigungsarm (33) aufweist.

14. Fahrzeugdach nach Anspruch 13, **dadurch gekennzeichnet, daß** das Koppelelement (95) für jedes Befestigungselement (20a bis 20c) mit Ausnahme des vordersten (20d) eine Riegelausnehmung (100a bis 100c) zur Aufnahme des Riegelteils (32) aufweist.

## Claims

1. Motor vehicle roof having a series of covering elements (10a to 10d) for the optional closing or at least partial opening of a roof opening (13) in a roof surface (11), the covering elements adjoining one another in the closed position and forming a flat set, each covering element in each case being connected at its narrow sides to a pivotable fastening element (20a to 20d) and the fastening elements being guided along a guide track (74) fixed to the roof, in each case two adjacent fastening elements being coupled for common movement in the opening and closing direction, as long as they have not been pivoted out fully, and being decoupled as soon as one of the two fastening elements has reached its fully pivoted-out position, and engaging in one another in such a way that, in the uncoupled state, they can be displaced with respect to one another, pivoting out the fastening elements which have not yet been pivoted out fully; that a fastening element in the fully pivoted-out position can be locked firmly to at least some of the other fastening elements already pivoted out fully under the influence of the opening movement of the one adjacent fastening element, and that the locking of a fastening element that has been pivoted out fully to at least some of the other still fully pivoted-out fastening elements can be released automatically under the influence of the closing movement of the one adjacent fastening element, **characterized in that** at least some of all the fastening elements (20a to 20d) pivoted out fully are in each case firmly engaged with a common coupling element (95) which can be displaced along the guide track (74) fixed to the roof or can also be fixed with respect to the latter.

2. Motor vehicle roof according to Claim 1, **characterized in that** the coupling element (95) can be locked in at least one position to the guide track (74) fixed to the roof.

3. Motor vehicle roof according to Claim 2, **characterized in that** a coupling control part (90) is provided which is driven along the guide track (74) by a drive unit (87) for the purpose of displacement and can be locked to the coupling element (95).

4. Motor vehicle roof according to Claim 3, **characterized in that** the coupling element (95) has a locking device (102) for locking to a guide rail (75) of the guide track (74) fixed to the roof or to the coupling control part (90) and which, by means of a displacement of the coupling control part with respect to the coupling element in the closed position of the set of covering elements, is actuated in such a way that it releases the locking to the guide rail fixed to the roof and closes the locking to the coupling control part.

5. Motor vehicle roof according to Claim 4, **characterized in that** the locking device comprises a pivotable bolt hammer (102) which produces the corresponding locking by engaging in bolt recesses (104 or 91) in the guide track (74) fixed to the roof and in the coupling control element (90).

6. Motor vehicle roof according to Claim 3 or 4, **characterized in that** an additional drive unit (73) is provided in order to drive the foremost fastening element (20d).

7. Motor vehicle roof according to one of Claims 3 to 6, **characterized in that,** in the closed position of the set of covering elements, the coupling element (95) is locked to the guide track (74) fixed to the roof, while the coupling control part (90) can be displaced with respect to the coupling element, **in that**, at the start of the opening movement, the coupling control part is pushed forwards towards the coupling element, as a result of which the rearmost fastening element (20a) is pivoted out, the coupling control part releases the locking of the coupling element to the guide track and effects locking of the coupling element to the coupling control part, and **in that**, by means of further pushing the coupling control element forwards, outward pivoting and then locking of the rearmost fastening element to the coupling element is effected, ultimately the covering elements (10a to 10d) being pushed together forwards to form a group by means of continuously pushing the coupling control element forwards.

8. Motor vehicle roof according to one of Claims 3 to 7, **characterized in that** the coupling control part (90) engages with the rearmost fastening element (20a) in such a way that a displacement of the coupling control part along the guide track (74) fixed to the roof has the effect of pivoting the rearmost fastening element out or back.

9. Motor vehicle roof according to Claim 8, **characterized in that** the coupling control part (90) actuates an opening lever (94) which is fixed to the coupling element (95) such that it can pivot and interacts with the rearmost fastening element (20a).

10. Motor vehicle roof according to Claim 9, **characterized in that** the opening lever (94) is formed as a slotted guide lever which, by means of a guide pin (96), engages in a guide slot (42) formed on the last fastening element (20a) and, in turn, is provided with a guide slot (93) in which a guide pin (92) formed on the coupling control part (90) engages.

11. Motor vehicle roof according to one of the preceding claims, **characterized in that** the coupling element (95) comprises a plurality of members (97, 99) which are connected to one another such that they can pivot.

12. Motor vehicle roof according to one of the preceding claims, **characterized in that**, except for the foremost fastening element (20d), a coupling element member (97a to 97c) is provided for each fastening element (20a to 20c).

13. Motor vehicle roof according to one of the preceding claims, **characterized in that** the locking between the fastening elements (20a to 20d) and the coupling element (95) is carried out via a locking element which is formed as a bolt rocker (31), which is mounted in its middle section such that it can pivot and has a bolt part (32) on its one end section and an actuating arm (33) on its other end section.

14. Motor vehicle roof according to Claim 13, **characterized in that** the coupling element (95) has, for each fastening element (20a to 20c) with the exception of the foremost (20d), a bolt recess (100a to 100c) to accommodate the bolt part (32).

## Revendications

1. Toit de véhicule avec une succession d'éléments de panneau (10a à 10d) pour, sélectivement, fermer ou dégager au moins partiellement une ouverture de toit (13) dans une surface de toit (11), les éléments de panneau, dans la position fermée, étant contigus et constituant un ensemble plan ou surfacique, chaque élément de panneau étant respectivement relié sur ses côtés étroits à un élément de fixation pivotant (20a à 20d) et les éléments de fixation étant guidés le long d'une voie de guidage (74) solidaire du toit, deux éléments de fixation voisins étant chaque fois accouplés pour un mouvement commun dans la direction d'ouverture et de fermeture tant qu'ils ne sont pas totalement pivotés vers l'extérieur, et désaccouplés dès qu'un des deux éléments de fixation a atteint sa position totalement pivotée vers l'extérieur, et étant en engagement mutuel de telle sorte qu'à l'état désaccouplé, ils peuvent être déplacés l'un par rapport à l'autre avec pivotement vers l'extérieur de l'élément de fixation non encore totalement pivoté vers l'extérieur, qu'un élément de fixation en position totalement pivotée vers l'extérieur peut, sous l'influence du mouvement d'ouverture de l'un des éléments de fixation voisins, être fixement verrouillé avec au moins une partie des autres éléments de fixation déjà totalement pivotés vers l'extérieur, et que le verrouillage d'un élément de fixation totalement pivoté vers l'extérieur avec les autres ou au moins une partie des autres éléments de fixation totalement pivotés vers l'extérieur peut être automatiquement libéré sous l'influence du mouvement de fermeture de l'un des éléments de fixation voisins, **caractérisé en ce qu'**au moins une partie de la totalité des éléments de fixation (20a à 20d) totalement pivotés vers l'extérieur se trouve respectivement en engagement fixe avec un élément d'accouplement commun (95), qui peut être coulissé le long de la voie de guidage (74) solidaire du toit et qui peut également être immobilisé par rapport à celle-ci.

2. Toit de véhicule selon la revendication 1, **caractérisé en ce que** l'élément d'accouplement (95) peut être verrouillé avec la voie de guidage (74) solidaire du toit dans au moins une position.

3. Toit de véhicule selon la revendication 2, **caractérisé en ce qu'**il est prévu une pièce de commande d'accouplement (90), qui est entraînée par une unité d'entraînement (87) pour coulisser le long de la voie de guidage (74) et qui peut être verrouillée avec l'élément d'accouplement (95).

4. Toit de véhicule selon la revendication 3, **caractérisé en ce que** l'élément d'accouplement (95) présente un dispositif de verrouillage (102) pour le verrouillage avec un rail de guidage (75) solidaire du toit de la voie de guidage (74) ou respectivement avec la pièce de commande d'accouplement (90), dispositif qui, par un coulissement de la pièce de commande d'accouplement par rapport à l'élément d'accouplement dans la position fermée de l'ensemble d'éléments de panneau, est actionné de telle sorte qu'il libère le verrouillage avec le rail de guidage solidaire du toit et ferme le verrouillage avec la pièce de commande d'accouplement.

5. Toit de véhicule selon la revendication 4, **caractérisé en ce que** le dispositif de verrouillage comprend un marteau pivotant de verrouillage (102), qui réalise le verrouillage correspondant en s'engageant dans des évidements de verrouillage (104 ou 91) dans la voie de guidage (74) solidaire du toit ou respectivement dans la pièce de commande d'accouplement (90).

6. Toit de véhicule selon la revendication 3 ou 4, **caractérisé en ce qu'**il est prévu une unité d'entraînement supplémentaire (73) pour entraîner l'élément de fixation le plus avant (20d).

7. Toit de véhicule selon l'une des revendications 3 à 6, **caractérisé en ce que**, dans la position fermée de l'ensemble d'éléments de panneau, l'élément d'accouplement (95) est verrouillé avec la voie de guidage (74) solidaire du toit tandis que la pièce de commande d'accouplement (90) peut coulisser par rapport à l'élément d'accouplement, **en ce qu'**au début du mouvement d'ouverture, la pièce de commande d'accouplement est poussée vers l'avant en direction de l'élément d'accouplement, de sorte que l'élément de fixation le plus arrière (20a) est pivoté vers l'extérieur et que la pièce de commande d'accouplement libère le verrouillage de l'élément d'accouplement avec la voie de guidage et produit un verrouillage de l'élément d'accouplement avec la pièce de commande d'accouplement, et **en ce que**, par une poussée supplémentaire vers l'avant de la pièce de commande d'accouplement, on produit un pivotement vers l'extérieur suivi d'un verrouillage de l'élément de fixation le plus arrière avec l'élément d'accouplement, la poursuite de la poussée vers l'avant de la pièce de commande d'accouplement ayant finalement pour effet que les éléments de panneau (10a à 10d) sont, en les poussant les uns contre les autres, regroupés en un paquet vers l'avant.

8. Toit de véhicule selon l'une des revendications 3 à 7, **caractérisé en ce que** la pièce de commande d'accouplement (90) est en engagement avec l'élément de fixation le plus arrière (20a) de telle sorte qu'un coulissement de la pièce de commande d'accouplement le long de la voie de guidage (74) solidaire du toit produit un pivotement vers l'extérieur ou respectivement un pivotement en retour de l'élément de fixation le plus arrière.

9. Toit de véhicule selon la revendication 8, **caractérisé en ce que** la pièce de commande d'accouplement (90) actionne un levier de relèvement (94), qui est fixé à pivotement sur l'élément d'accouplement (95) et qui coopère avec l'élément de fixation le plus arrière (20a).

10. Toit de véhicule selon la revendication 9, **caractérisé en ce que** le levier de relèvement (94) est réalisé sous forme de levier à coulisse, qui s'engage au moyen d'un axe de coulisse (96) dans une fente de coulisse (42) formée sur l'élément de fixation le plus arrière (20a) et qui est lui-même pourvu d'une fente de coulisse (93) dans laquelle s'engage un axe de coulisse (92) formé sur la pièce de commande d'accouplement (90).

11. Toit de véhicule selon l'une des revendications précédentes, **caractérisé en ce que** l'élément d'accouplement (95) comprend plusieurs segments (97, 99) qui sont reliés à pivotement entre eux.

12. Toit de véhicule selon l'une des revendications précédentes, **caractérisé en ce qu'**un segment d'élément d'accouplement (97a à 97c) est prévu pour chaque élément de fixation (20a à 20c), sauf pour l'élément de fixation le plus avant (20d).

13. Toit de véhicule selon l'une des revendications précédentes, **caractérisé en ce que** le verrouillage entre les éléments de fixation (20a à 20d) et l'élément d'accouplement (95) s'effectue au moyen d'un élément de verrouillage qui est réalisé sous la forme d'une bascule de verrouillage (31), qui est montée à pivotement dans sa partie centrale et qui présente un organe de verrouillage (32) sur une de ses parties terminales et un bras d'actionnement (33) sur son autre partie terminale.

14. Toit de véhicule selon la revendication 13, **caractérisé en ce que** l'élément d'accouplement (95) présente, pour chaque élément de fixation (20a à 20c) à l'exception de l'élément de fixation le plus avant (20d), un évidement de verrouillage (100a à 100c) destiné à recevoir l'organe de verrouillage (32).
